## Europäisches Patentamt

## European Patent Office

## Office européen des brevets

(19)

(11) EP 0 811 417 A2

(12) **EUROPÄISCHE PATENTANMELDUNG**

(43) Veröffentlichungstag:
10.12.1997 Patentblatt 1997/50

(51) Int. Cl.[6]: **B01D 53/86**

(21) Anmeldenummer: 97106216.1

(22) Anmeldetag: 16.04.1997

(84) Benannte Vertragsstaaten:
**DE ES FR GB IT**

(30) Priorität: **05.06.1996 DE 19622536**

(71) Anmelder:
**METALLGESELLSCHAFT
AKTIENGESELLSCHAFT
60323 Frankfurt am Main (DE)**

(72) Erfinder:
 • **Willing, Wolfgang, Dr.
   61206 Wöllstadt (DE)**
 • **Stetzer, Klaus
   63303 Dreieich (DE)**

(54) **Verfahren zum Entschwefeln eines H2S und SO2 enthaltenden Gases unter Bildung von Elementarschwefel**

(57) Das zu entschwefelnde Gasgemisch wird mit einer Eintrittstemperatur im Bereich von 50 bis 180°C durch eine erste katalytische Reinigungsstufe geleitet, wobei sich der im Festbett angeordnete Katalysator mit Elementarschwefel belädt. Im Gasgemisch, das die erste Stufe verläßt, stellt man einen Gehalt an Wasserstoff ein, so daß das molare Verhältnis $H_2:SO_2$ 4:1 bis 100:1 beträgt. Es folgt eine katalytische Hydrierstufe, aus welcher man ein $H_2S$-haltiges Gasgemisch mit einem $SO_2$-Restgehalt von höchstens 0,1 Vol.-% abzieht. Unter Zugabe von Sauerstoff leitet man das $H_2S$-haltige Gasgemisch durch eine katalytische Endreinigungsstufe, in welcher man bei Temperaturen im Bereich von 50 bis 180°C Elementarschwefel an einem im Festbett angeordneten Katalysator niederschlägt.

EP 0 811 417 A2

Printed by Xerox (UK) Business Services
2.15.3/3.4

**Beschreibung**

Die Erfindung betrifft ein verfahren zum Entschwefeln eines $H_2S$ und $SO_2$ enthaltenden Gasgemisches an mindestens einem im Festbett angeordneten Katalysator, auf welchem sich Elementarschwefel niederschlägt, welcher durch eine Regenerierbehandlung periodisch entfernt wird.

Ein solches Verfahren ist aus EP-B-0506160 bekannt. Hierbei arbeitet man in einer ersten katalytischen Reinigungsstufe mit einem metalloxidreichen Katalysator und führt das teilweise gereinigte Gas unter Zugabe von Sauerstoff anschließend durch ein Aktivkohlebett, welches als Endreinigungsstufe dient. Dabei entsteht auf der Aktivkohle neben der Elementarschwefel-Beladung auch eine erhebliche Beladung mit Schwefelsäure.Es hat sich gezeigt, daß die Schwefelsäure das Aktivkohlebett schädigen kann. Diese Schädigung kann durch direktes Einwirken der Schwefelsäure auf die Aktivkohle geschehen, oder aber als Folge von Reaktionen mit Gasbestandteilen.

Der Erfindung liegt die Aufgabe zugrunde, ein Verfahren zu schaffen, welches eine hohe Reinheit des aus der Endstufe abgezogenen Gasgemisches ermöglicht. Gleichzeitig soll das Verfahren auch für Gasgemische anwendbar sein, die neben $H_2S$ und $SO_2$ noch erhebliche Mengen an COS und/oder $CS_2$ enthalten. Ferner soll der Nachteil der Bildung von Schwefelsäure vermieden werden. Erfindungsgemäß wird dies dadurch erreicht, daß das zu entschwefelnde Gasgemisch

a) mit einer Eintrittstemperatur im Bereich von 50 bis 180°C durch eine erste katalytische Reinigungsstufe strömt, wobei sich der im Festbett angeordnete Katalysator mit Elementarschwefel belädt,

b) daß man aus der ersten katalytischen Reinigungsstufe ein $SO_2$ und Elementarschwefel enthaltendes zweites Gasgemisch mit einer Temperatur im Bereich von 80 bis 280°C abzieht und im zweiten Gasgemisch einen Gehalt an Wasserstoff entsprechend einem molaren Verhältnis von $H_2$ zu $SO_2$ von 4:1 bis 100:1 einstellt,

c) daß man das wasserstoffhaltige zweite Gasgemisch durch eine katalytische Hydrierstufe leitet und aus der Hydrierstufe ein $H_2S$-haltiges drittes Gasgemisch mit einem $SO_2$-Restgehalt von höchstens 0,1 Vol.-% abzieht,

d) daß man das dritte Gasgemisch unter Zugabe von $O_2$-haltigem Gas in einer Menge von 0,5 bis 20 mol $O_2$ pro mol $H_2S$ durch eine katalytische Endreinigungsstufe leitet, in welcher bei Temperaturen im Bereich von 50 bis 180°C Elementarschwefel an einem im Festbett angeordneten Katalysator gebildet und adsorbiert wird, wobei man aus der Endreinigungsstufe entschwefeltes Gasgemisch abzieht.

Die der ersten katalytischen Reinigungsstufe nachgeschaltete Hydrierstufe bringt $SO_2$, COS, $CS_2$ und Elementarschwefel insbesondere durch die folgenden Umsetzungen praktisch zum Verschwinden:

$$SO_2 + 3\,H_2 \rightarrow H_2S + 2\,H_2O$$

$$COS + H_2 \rightarrow H_2S + CO$$

$$CS_2 + H_2 + H_2O \rightarrow 2\,H_2S + CO$$

$$S_x + xH_2 \rightarrow xH_2S$$

Das aus der katalytischen Hydrierstufe austretende Gasgemisch enthält somit an Schwefelverbindungen nahezu ausschließlich $H_2S$. Als Katalysatoren verwendet man in der Hydrierstufe z.B. bekannte Hydrierkatalysatoren, deren Hauptkomponenten Kobalt, Nickel und/oder Molybdän sind. $Al_2O_3$, $SiO_2$ oder $TiO_2$ können hierbei als Trägersubstanz dienen. Geeignet sind auch Co-Mo- oder Ni-Mo-Hydrierkatalysatoren, die mit weiteren Komponenten imprägniert sind, z.B. Metallen aus der Fe-Gruppe. Ferner können auch Si- und/oder P-Verbindungen als Imprägnierung dienen. Vorteilhafte Hydrierkatalysatoren verwenden als Trägermaterial $SiO_2$ oder $TiO_2$ zusammen mit den erwähnten Hauptkomponenten (Co, Mo, Ni).

Für die erste katalytische Reinigungsstufe empfehlen sich metalloxidreiche Katalysatoren, z.B. auf der Basis von $Al_2O_3$, $SiO_2$ oder $TiO_2$. Diese Katalysatoren können zusätzlich noch mit 0,5 bis 5 Gew.-% Nickel, Eisen oder Kobalt imprägniert sein, wie das aus EP-B-0506160 bekannt ist. Für die Endreinigung eignen sich diese metalloxidreichen Katalysatoren ebenfalls. Eine weitere Möglichkeit besteht darin, in der Endreinigungsstufe mit Aktivkohle oder Aktivkoks als Katalysator zu arbeiten.Ein bevorzugter Katalysator für die Endreinigungsstufe weist eine Imprägnierung mit 0,5 bis 20 Gew.-% Kupfer auf einem $Al_2O_3$-, $SiO_2$- oder $TiO_2$-Träger auf.

Das erfindungsgemäße Verfahren ist insbesondere auch dafür geeignet, Abgase aus Claus-Anlagen zu behandeln. In diesen Fällen weist das zu entschwefelnde Gasgemisch üblicherweise folgende Komponenten auf:

$H_2S$:    0,5 bis 5 Vol-%,
$SO_2$:    0,2 bis 3 Vol-%,
$H_2$ :    0 bis 5 Vol-%,

COS:    0 bis 0,5 Vol-% und

$CS_2$ :    0 bis 0,5 Vol-%.

Das erfindungsgemäße Verfahren kann so ausgestaltet werden, daß man der ersten katalytischen Reinigungsstufe ein zu entschwefelndes Gasgemisch zuführt, in welchem das Molverhältnis von $H_2S$ zu $SO_2$ im Bereich von 1:1 bis 5:1 liegt. Vorteilhaft ist ferner, daß man die Bedingungen in der ersten katalytischen Reinigungsstufe für das Entfernen von $CS_2$ und COS nicht optimieren muß, da für das Beseitigen dieser Verbindungen nun die katalytische Hydrierstufe vorgesehen ist. In der Endreinigungsstufe läßt sich die Bildung von Schwefelsäure gut unterdrücken, da das in die Endreinigungsstufe eintretende Gas praktisch $SO_2$-frei ist. Ferner sind insbesondere Aktivkohle und Cu-Katalysatoren für die selektive Oxidation von $H_2S$ zu Elementarschwefel geeignet. Ohne Schwierigkeiten kann man aus der Endreinigungsstufe ein behandeltes Gasgemisch abziehen, dessen summierter Gehalt an $H_2S$ + $SO_2$ höchstens 250 ppm beträgt. Beim Entschwefeln von Tail-Gasen aus Claus-Anlagen erreicht man mit dem erfindungsgemäßen Verfahren einen Schwefel-Rückgewinnungsgrad, bezogen auf das der Clausanlage zugeführte Gas, von 99,9%. Ein solcher Rückgewinnungsgrad erforderte bisher wesentlich aufwendigere Waschverfahren.

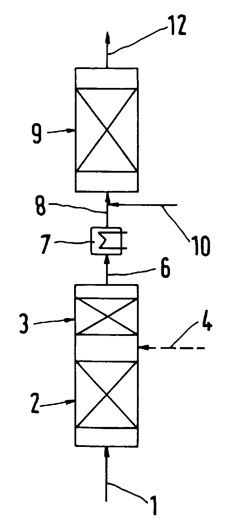

Ausgestaltungsmöglichkeiten des Verfahrens werden mit Hilfe der Zeichnung erläutert, die ein Fließschema des Verfahrens zeigt.

Das zu entschwefelnde Gasgemisch wird in der Leitung (1) herangeführt, wobei es eine Temperatur im Bereich von 50 bis 180°C aufweist. In der ersten katalytischen Reinigungsstufe (2) belädt sich der im Festbett angeordnete Katalysator allmählich mit Elementarschwefel, der aus der exothermen Reaktion

$$2\ H_2S + SO_2 \rightarrow 3S + 2\ H_2O$$

entsteht. Die sich in der ersten Stufe (2) ergebende Temperaturerhöhung ist vorteilhaft, weil dadurch günstige Bedingungen für die anschließende katalytische Hydrierstufe (3) geschaffen werden. Üblicherweise enthält das zu entschwefelnde Gasgemisch einen ausreichend hohen Anteil an $H_2$ für die Hydrierstufe (3). Sollte dies nicht der Fall sein, kann man durch die gestrichelt eingezeichnete Leitung (4) Wasserstoff zuführen.

Die Eintrittstemperatur der Hydrierstufe (3) liegt üblicherweise bei 80 bis 280°C und vorzugsweise bei 130 bis 170°C.

Wie die Zeichnung zeigt, kann man die erste katalytische Reinigungsstufe (2) und die Hydrierstufe (3) in einem gemeinsamen Behälter unterbringen, wodurch der apparative Aufwand klein gehalten wird. In der Praxis kann das Katalysator-Festbett der Hydrierstufe (3) eine Höhe von 5 bis 100 cm und vorzugsweise 20 bis 50 cm aufweisen. Durch die Hydrierstufe wird es ferner möglich, die Katalysatormenge der ersten Reinigungsstufe (2) etwas zu reduzieren, ohne die Reinigungswirkung der Gesamtanlage zu verschlechtern.

In der Leitung (6) zieht man aus der Hydrierstufe (3) ein $H_2S$-haltiges Gasgemisch mit einem $SO_2$-Restgehalt von höchstens 0,1 Vol-% ab, dieses Gasgemisch wird hier auch als "drittes Gasgemisch" bezeichnet. Nach einer Kühlung (7) führt man das dritte Gasgemisch durch die Leitung (8) zur Endreinigungsstufe (9). Luft, mit $O_2$ angereicherte Luft oder technisch reinen Sauerstoff dosiert man durch die Leitung (10) zu. Die Eintrittstemperatur der Endreinigungsstufe (9) liegt im Bereich von 50 bis 180°C und vorzugsweise 90 bis 150°C. Am Katalysator der Endreinigungsstufe wird $H_2S$ mit $O_2$ zu Elementarschwefel und Wasser oxidiert. Das entschwefelte Gas mit einem summierten Gehalt an $H_2S+SO_2$ von üblicherweise höchstens 250 ppm wird in der Leitung (12) abgezogen.

Die Regenerierung der mit Elementarschwefel beladenen Katalysatoren kann z.B. in der Weise erfolgen, wie es in EP-B-0506160 beschrieben ist. Man verwendet hierzu z.B. einen erhitzten Teilstrom des zu entschwefelnden Gases. Möglich ist es ferner, die Regenerierung mit Wasserdampf durchzuführen.

Beispiel:

Einer der Zeichnung entsprechenden Laborapparatur ohne die Leitung (4) werden durch die Leitung (1) 600 Nl/h Restgas aus einer Clausanlage zugeführt. Für die erste Reinigungsstufe (2) wird ein körniger Katalysator bestehend aus Aluminiumoxid mit einer Nickel-Imprägnierung (1 Gew.-%) verwendet, der ein Festbett von 1,25 l mit einer Höhe von 100 cm bildet. Der handelsübliche Hydrierkatalysator der Stufe (3) besteht aus körnigem Aluminiumoxid mit einer Imprägnierung von 4,5 Gew.-% $Co_3O_4$ und 12,8 Gew.-% $MoO_3$, das Bett hat eine Schütthöhe von 30 cm. Durch die Leitung (10) werden 15 Nl/h Luft zugeführt. Die Endreinigungsstufe (9) wird durch eine Schüttung aus Aluminiumoxid imprägniert mit 8 Gew.-% Kupfer gebildet, wobei die Schüttung 80 cm hoch ist, darüber befindet sich eine Aktivkohleschicht mit 20 cm Höhe, um Schwefeldampf zu adsorbieren.

Das Gas der Leitung (1) enthält 334 Vol.-ppm Elementarschwefel, und in der Leitung (12) finden sich noch 65 Vol.-ppm Elementarschwefel.

Folgende Konzentrationen (in Volumen - ppm) und Temperaturen T (in °C) wurden gemessen, dabei liegt die Meßstelle A zwischen den Stufen (2) und (3), die Meßstelle B am Eintritt in die Stufe (9) und die Meßstelle C am Eintritt in die Aktivkohleschicht:

3

|                | Leitung (1) | A    | Leitung (6) | B    | C   | Leitung (12) |
|----------------|-------------|------|-------------|------|-----|--------------|
| $H_2S$         | 9776        | 1335 | 2263        | 2208 | 132 | 127          |
| $SO_2$         | 4945        | 692  | 35          | 34   | <5  | <5           |
| COS            | 163         | 155  | <5          | 0    | <5  | <5           |
| $CS_2$         | 62          | 65   | <5          | 0    | <5  | <5           |
| $H_2$          | 2350        | 2330 | 1402        | 0    | 0   | 0            |
| $O_2$          | 0           | 0    | 0           | 4887 | 0   | 0            |
| T              | 134         | 149  | 182         | 125  | 139 | 138          |

Die Regeneration der Betten erfolgt mit Reingas der Leitung (12), welches man mit $H_2S$ bis zu einem $H_2S$-Gehalt von 2 Vol.-% anreichert. Die Fließrichtung des Regenerationsgases durch die Stufen (9), (3) und (2) ist entgegengesetzt zu der während der Beladung, d. h. während der Gasreinigung.

Die im Kreislauf geförderte Regenerationsgasmenge ist so groß wie die Gasmenge während der Beladung. Die Stufe (9) wird zunächst 2 Stunden mit Regenerationsgas bei Beladetemperatur durchströmt, danach erfolgt die Aufheizung des Gases auf 320°C, wobei 10 Stunden lang regeneriert wird. Die anschließende Kühlphase dauert 6 Stunden und wird mit gereinigtem Abgas der Leitung (12) aus einer anderen, zur gleichen Zeit der Gasreinigung dienenden Anlage durchgeführt.

Die Regeneration der Stufen (3) und (2) wird ohne die 2-stündige Behandlung bei Beladetemperatur, sonst jedoch wie die Stufe (9) durchgeführt, wobei die Stufen (9), (3) und (2) nacheinander durchströmt werden.

**Patentansprüche**

1. Verfahren zum Entschwefeln eines $H_2S$ und $SO_2$ enthaltenden Gasgemisches an mindestens einem im Festbett angeordneten Katalysator, auf welchem sich Elementarschwefel niederschlägt, welcher durch eine Regenerierbehandlung periodisch entfernt wird, dadurch gekennzeichnet, daß das zu entschwefelnde Gasgemisch

   a) mit einer Eintrittstemperatur im Bereich von 50 bis 180°C durch eine erste katalytische Reinigungsstufe strömt, wobei sich der im Festbett angeordnete Katalysator mit Elementarschwefel belädt,
   b) daß man aus der ersten katalytischen Reinigungsstufe ein $SO_2$ und Elementarschwefel enthaltendes zweites Gasgemisch mit einer Temperatur im Bereich von 80 bis 280°C abzieht und im zweiten Gasgemisch einen Gehalt an Wasserstoff entsprechend einem molaren Verhältnis von $H_2$ zu $SO_2$ von 4:1 bis 100:1 einstellt,
   c) daß man das wasserstoffhaltige zweite Gasgemisch durch eine katalytische Hydrierstufe leitet und aus der Hydrierstufe ein $H_2S$-haltiges drittes Gasgemisch mit einem $SO_2$-Restgehalt von höchstens 0,1 Vol.-% abzieht,
   d) daß man das dritte Gasgemisch unter Zugabe von $O_2$-haltigem Gas in einer Menge von 0,5 bis 20 mol $O_2$ pro mol $H_2S$ durch eine katalytische Endreinigungsstufe leitet, in welcher bei Temperaturen im Bereich von 50 bis 180°C Elementarschwefel an einem im Festbett angeordneten Katalysator gebildet und adsorbiert wird, wobei man aus der Endreinigungsstufe entschwefeltes Gasgemisch abzieht.

2. Verfahren nach Anspruch 1, dadurch gekennzeichnet, daß man der ersten katalytischen Reinigungsstufe ein zu entschwefelndes Gasgemisch zuführt, welches enthält:

   $H_2S$ :    0,5 bis 5 Vol.-%,
   $SO_2$ :    0,2 bis 3 Vol.-%,
   $H_2$ :    0 bis 5 Vol.-%,
   COS:    0 bis 0,5 Vol.-%,
   $CS_2$ :    0 bis 0,5 Vol.-%.

3. Verfahren nach Anspruch 1 oder 2, dadurch gekennzeichnet, daß man der ersten katalytischen Reinigungsstufe ein zu entschwefelndes Gasgemisch zuführt, in welchem das Molverhältnis von $H_2S$:$SO_2$ im Bereich von 1:1 bis 5:1 liegt.

4. Verfahren nach einem der Ansprüche 1 bis 3, dadurch gekennzeichnet, daß man der ersten katalytischen Reinigungsstufe ein zu entschwefelndes Gasgemisch mit mindestens 100 ppm COS und mindestens 50 ppm $CS_2$ zuführt.